# EUROPEAN PATENT APPLICATION

(11) **EP 2 415 711 A1**
(43) Date of publication of application: **08.02.2012**
(21) Application number: 10008156.1
(22) Date of filing: 05.08.2010
(51) Int. Cl.: C01B 33/033

(54) **Process and apparatus for the preparation and recovery of high purity silicon**

(71) Applicant: Hycore ANS, 3908 Porsgrunn (NO)
(72) Inventor: Rosenkilde, Christian, 3911 Porsgrunn (NO); Robert, Eric, 2250 Olen (BE)
(74) Representative: Umicore RDI Patent Department

(57) **Abstract**

This invention concerns an enhanced process and apparatus for the preparation of high purity Si by reduction of SiCl₄ in a molten Zn bath covered by a layer of molten salts.

The process is characterized in that the Si is recovered on a cooled body submerged in the molten Zn bath.

The reactor is preferably equipped with a separate zone for extraction of the cooled body, this zone being either covered by a relatively thin layer of molten salts, or even being free of salts. Alternatively, this zone can be covered by salts having a composition selected so as to minimize the contamination of the Si.

Using a cooled body, large Si crystals are formed, which are not prone to surface oxidation. The preferred embodiments tend to limit the contamination of the Si deposits by the salts upon extraction of the cooled body.

## Description

This invention concerns an enhanced process and apparatus for the preparation of high purity silicon. It more particularly concerns the recovery of the Si after reduction of SiCl₄ in a molten zinc bath covered by a layer of molten salts.

WO 2006100114 describes the basic process, i.e. the injection of SiCl₄ into a liquid Zn bath, thereby obtaining metallic Si and ZnCl₂. The process is operated above the boiling point of ZnCl₂, which is allowed to evaporate. A Si-bearing crust forms on top of the Zn bath, either by lowering the temperature of the bath, or by exceeding the solubility limit of Si in Zn. The crust can be recovered, and the contained Si further purified at high temperature to obtain solar grade Si.

WO 2008120994 concerns a variant of the above process, using a layer of molten salts on top of the bath. The Si crystals collect at the boundary between the layers of molten Zn and molten salts. They can be removed either by pumping or mechanically, by grabbing at regular intervals, or continuously.

WO 2008120995 teaches a Si production process similar to the above, but combines it with an integrated electrolysis process. This process is useful to regenerate the ZnCl₂ as Zn and Cl₂: the Zn can then be re-used in the SiCl₄ reduction, and the Cl₂ in the production of SiCl₄ from metallurgical grade (impure) Si or SiO₂. A 3-zone reactor integrating the Si production and the ZnCl₂ electrolysis is also divulged.

WO 2008127120 relates to a 2-zone reactor, with a reaction zone and a collection zone, both operated below the boiling point of ZnCl₂. The Si is assumed to float in the upper part the molten ZnCl₂ layer.

The advantages of using a Zn bath covered with a top layer of molten salts are described in the prior art. LiCl, NaCl and KCl, but also alkali earth chlorides such as CaCl₂ and other alkali chlorides can be used; KCl and/or NaCl are however the most natural choice. Advantages are the capture in the salts layer of volatiles, such as ZnCl₂, un-reacted SiCl₄, and any evaporating Zn, and also of Si particles that otherwise could be entrained by the evolving gases. The salts layer furthermore protects the Si and Zn from the gaseous atmosphere in the furnace. A suitable composition of the salts moreover allows for compatibility with the envisaged electrolysis for the recovery of Zn and Cl₂

However, applying the above teaching also introduces new difficulties.

Most of the Si accumulates as an agglomerate of fine powdery- material at the interface between the molten layers of Zn and salts. This Si can be harvested using mechanical means, but due to its porous structure, its surface readily oxidizes, rendering the subsequent purification and melting to ingots rather laborious.

Another problem is that this Si will be contaminated by the salts. This is in particular unavoidable when lifting the harvested Si out of the furnace though a thick layer of molten salts. The amount of salts in the harvested Si-bearing phase should preferably be minimized. Contamination with KCl and/or NaCl is especially harmful, as their high boiling points (respectively 1420 and 1413 °C) render their quantitative elimination difficult, even at the melting temperature of Si (1414 °C).

This invention aims at solving one or both of the above-mentioned difficulties. To this end, an enhanced process and corresponding apparatus are described.

In a first embodiment, a process is proposed for the production of high purity Si metal from the reduction of SiCl₄ by liquid Zn in a reactor, comprising the steps of: injecting SiCl₄ in the liquid Zn in a reaction zone, thereby forming Si, which dissolves into the Zn, and gaseous ZnCl₂; capturing the gaseous ZnCl₂ in a salts layer floating on top of the liquid Zn, this layer having a determined thickness and composition; continuously collecting the Si dissolved in the Zn by crystallization on a cooled body immersed in the liquid Zn; and, recovering the crystallized Si by extracting the cooled body from the Zn bath.

The salts can advantageously comprise ZnCl₂ and KCl, ZnCl₂ being further captured in this layer, gradually enriching the salts with this compound.

Crystallization on a submerged cooled body appears to lead to the formation of large-grained Si crystals that are much more resistant to surface oxidation than the agglomerates obtained according to the prior art. The compact structure of the deposit also helps to limit the amount of salts adhering to the Si when the cooled body is extracted from the bath. This extraction is typically performed repeatedly, placing the body back in its submerged position once the Si-bearing deposit is recovered. Suitable materials for the cooled body are alumina, graphite, sialon, silica, and silicon nitride. The process is not limited to these materials, as any material that can serve as a cooled body and provide Si crystals of the desired quality can be used.

Preferably, the reactor is provided with a zone for the extraction of the cooled body, which zone is, in the step of recovering the crystallized Si, either one of: covered by a layer of molten salts having a thickness of less than said determined thickness; free of a layer of molten salts; or, covered by a layer of molten salts having a composition different from said determined composition.

According to the first option, the extraction zone can be covered with a thinner salts layer than the reaction zone. That way, the contact time between the Si-bearing material and the salts during extraction of the cooled body is reduced, thereby also reducing the amount of salts contaminating the Si-bearing deposit. To observe a clear enhancement, the thickness of the layer in the extraction zone should preferably be less than 50% of the thickness in the reaction zone of the furnace.

According to the second option, i.e. with the extraction zone free of salts, it is advisable to protect the surface of the Zn from oxidation by using an inert gas such as N₂. Indeed, any area of Zn that is not covered by a salts layer will be prone to oxidation by air.

The extraction zone can be clear of floating salts permanently during the complete cycle of operations. Alternatively, this zone can be cleared only when needed, i.e. when the cooled body covered by the Si-bearing deposit is raised for Si recovery. This could e.g. be realized by dipping a tube vertically into the bath, its bottom end immersed in the Zn, and by pressurizing the tube, preferably with an inert gas, so as to drive back its liquid contents into the bath. Upon release of the pressure, the tube will refill with Zn only, thus creating a zone free of floating salts inside the tube. This zone could be coaxial with the cooled body or its suspension mechanism.

According to the third option, the salts covering the extraction zone can have a composition different from that of the salts covering the reaction zone. A composition rich in ZnCl₂ (>50 wt%) could advantageously be selected. The salts entrained with the Si-bearing deposit on the cooled body are then easier to eliminate by evaporation than the NaCl- and/or KCI-rich salts typically covering the reaction zone. The exact composition used in the extraction zone can be adapted according to the operating conditions. In particular, if the operating temperature is low, more ZnCl₂ can be tolerated.

The process may usefully make use of a reactor comprising a plurality of either one or both of reaction zones and extraction zones.

Another embodiment concerns a reactor for production of high purity Si metal from the reduction of SiCl₄ by liquid Zn, characterized in that it comprises means for: injecting SiCl₄ in the liquid Zn in a reaction zone, thereby forming Si which dissolves into the Zn, and gaseous ZnCl₂; capturing the gaseous ZnCl₂ in a salts layer floating on top of the liquid Zn, this layer having a determined thickness and composition; collecting the Si dissolved in the Zn by crystallization on a cooled body immersed in the liquid Zn; and recovering the Si-bearing deposit by extracting the cooled body from the Zn bath.

There is no restriction as to the shape of the cooled body. It can for example be tubular, rectangular, disc- or drum-shaped.

Tubular and rectangular bodies are suitable for sequential crystallization, where the body is repeatedly immersed and then extracted once a desired amount of Si has formed.

For continuous crystallization, the reactor can advantageously be equipped with one or more rotatably mounted cooled bodies, which are partly submerged in the liquid Zn. These bodies can comprise discs or drums. According to this embodiment, Si deposits grow on the immersed surfaces, and are subsequently removed, e.g. by mechanical means, when these surfaces emerge from of the liquid Zn or salts.

This reactor can be equipped with a partition wall defining an extraction zone, so as to allow free circulation of the molten zinc but restricted circulation of the molten salts layer.

Said partition wall could be either permanent or else put in place temporarily, i.e. only when the cooled body is raised from the bath.

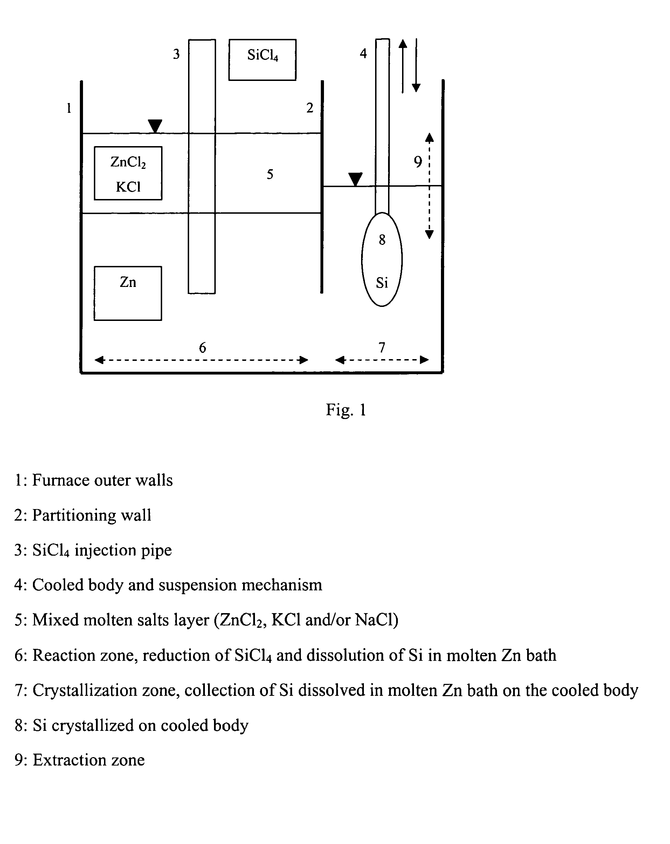

Figure 1 is a schematic representation of a possible realization of the furnace. Although only one SiCl₄ injection pipe and one single cooled body are shown, the present invention also pertains to embodiments using multiple instances of the corresponding reaction and extraction zones. A coaxial design can e.g. be envisaged, with either type of zone placed centrally, surrounded by a ring of zones of the complementary type.

It is not desirable to exceed the solubility limit of Si in Zn in the reaction zone, as otherwise particulate Si will be formed that will not be available for crystallization. This phenomenon can be avoided by raising the temperature in the reaction zone, by lowering the SiCl₄ injection rate or by enhancing the convection between reaction and crystallization zones.

When the zones are closely spaced, such as in the above-mentioned coaxial design, natural convection should suffice to transport the Si-bearing Zn to a crystallization zone. Natural convection could nevertheless be supplemented by forced convection, e.g. using pumps or directed gas injections.

### Example

A graphite reactor having an internal diameter of 44 cm and a height of 115 cm is placed in a coreless induction furnace. Molten Zn is added in the reactor up to a height of 45 cm. A graphite cylinder, open at both ends, is suspended in the reactor. The cylinder has a diameter of 15 cm and a length of 60 cm. The bottom 10 cm of the cylinder is immersed in the Zn. ZnCl₂-depleted molten salts (25% ZnCl₂, 75% KCl) are added on top of the Zn layer, with exclusion of the graphite cylinder. Inside the cylinder the surface of the Zn remains free of salts. N₂ is injected in the cylinder above the zinc level to protect it from oxidation. The temperature in the reactor is maintained between 810 and 850 °C.

Gaseous SiCl₄ is injected in the molten Zn, 5 cm above the bottom of the reactor, through a quartz tube. The SiCl₄ flow rate amounts to ca. 10 kg/hr.

A cooled body or cold finger is submerged in the Zn bath through the graphite cylinder, down to the bottom of the reactor. This cold finger consists in a closed end alumina tube equipped with an internal quartz tube through which nitrogen is blown at a flow rate of 25 m³/hr to cool the tube. A thermocouple is placed between the quartz and alumina tubes, approximately 40 cm from the bottom end. The nitrogen flow is controlled to ensure that the temperature of the cold finger does not drop below the boiling point of ZnCl_{2.}

The reaction between Zn and SiCl₄ consumes Zn, producing ZnCl₂. To keep the reactor in steady state, spent ZnCl₂-enriched salts are regularly replaced by fresh ZnCl₂-depleted salts. Metallic Zn is also added regularly to compensate for the Zn consumed by the reaction.

The Si generated by the reaction forms a deposit on the cold finger, in the Zn layer. At regular intervals, the cold finger is extracted and the deposit collected. The same cold finger is then inserted again. This procedure is repeated during 18 hours. A total of about 90 kg of Si-bearing product is collected.

The average concentration of Si in the deposit is 30%, which is significantly higher than when collecting the Si as agglomerate not using the cooled body principle (only about 15%). The balance of the deposit is metallic Zn. There is no contamination by salts.

## Claims

1. A process for production of high purity Si metal from the reduction of SiCl₄ by liquid Zn in a reactor, comprising the steps of:
- injecting SiCl₄ in the liquid Zn in a reaction zone, thereby forming Si, which dissolves into the Zn, and gaseous ZnCl₂;
- capturing the gaseous ZnCl₂ in a salts layer floating on top of the liquid Zn, this layer having a determined thickness and composition;
- collecting the Si dissolved in the Zn by crystallization on a cooled body immersed in the liquid Zn; and,
- recovering the crystallized Si by extracting the cooled body from the Zn bath.

2. Process according to claim 1, wherein the said reactor is provided with a zone for the extraction of the cooled body, which zone is, at least in the step of recovering the crystallized Si, either one of:
- covered by a layer of molten salts having a thickness of less than said determined thickness;
- free of a layer of molten salts; or
- covered by a layer of molten salts having a composition different from said determined composition.

3. Process according to claim 2, the said reactor comprising a plurality of either one or both of reaction zones and extraction zones.

4. Reactor for production of high purity Si metal from reduction of SiCl₄ by liquid Zn in a bath reactor, **characterized in that** it comprises means for:
- injecting SiCl₄ in the liquid Zn in a reaction zone, thereby forming Si, which dissolves into the Zn, and gaseous ZnCl₂;
- capturing the gaseous ZnCl₂ in a salts layer floating on top of the liquid Zn, this layer having a determined thickness and composition;
- collecting the Si dissolved in the Zn by crystallization on a cooled body immersed in the liquid Zn; and,
- recovering the crystallized Si by extracting the cooled body from the Zn bath.

5. Reactor according to claim 4, where the said cooled body is rotatably mounted so as to be partly submerged in the liquid Zn, thereby allowing for continuous collection of the Si, which is deposited on the submerged part of the body and removed from the part of the body that is not submerged.

6. Reactor according to claims 5 or 6, further comprising an extraction zone defined by one or more partition walls configured so as to allow free circulation of the molten zinc and restricted circulation of the molten salts layer.
